# EUROPEAN PATENT APPLICATION

(11) **EP 4 685 088 A1**
(43) Date of publication of application: **28.01.2026**
(21) Application number: 24190632.0
(22) Date of filing: 24.07.2024
(51) Int. Cl.: B65G 43/08, B65G 59/06, B65G 59/12, B65G 61/00

(54) **DESTACKING AND DISPENSING DEVICE FOR BOOKS AND PRE-GLUED BOOK BLOCKS**

(71) Applicant: Print Group Spólka z Ograniczona Odpowiedzialnoscia, 71-004 Szczecin (PL)
(72) Inventor: Krzanowski, Daniel, 71-043 Szczecin (PL)
(74) Representative: Wroblewski, Marcin Jan

(57) **Abstract**

The object of the invention is a destacking and dispensing device for stacks of books and pre-glued book blocks, comprising in the following sequence: a feeder (12), a destacking assembly, and a receiving mechanism. The destacking assembly comprises a destacking assembly transporter in the form of a multi-row narrow belt conveyor (3), and a retaining element (7) placed above the multi-row narrow belt conveyor (3) and slidably fixed in a plane perpendicular to the plane of the multi-row narrow belt conveyor (3), as well as a driven ejector (6) fixed between the narrow belts of the multi-row narrow belt conveyor (3).

The object of the invention is also a method for separating stacks of books and pre-glued book blocks, in which the position of the retaining element (7) is set in the destacking assembly and a destacking window is formed, and subsequently stacks of books or pre-glued book blocks are fed to the destacking assembly and transported by the multi-row narrow belt conveyor (3) until the stack stops on the retaining element (7). Subsequently, the multi-row narrow belt conveyor (3) is stopped, following which the ejector (6) is calibrated so as to be positioned behind the stack of books or pre-glued book blocks, and the ejector (6) is raised to a destacking height resulting from the height of at least one product to be separated. Afterwards, the ejector (6), the multi-row narrow belt transporter (3) and the receiving mechanism are activated at the same time in the same processing direction, and the books or pre-glued book blocks forming the stack are separated by pushing out the books or pre-glued book blocks lying at the bottom of the stack through the destacking window.

## Description

### Technical Field

The object of the invention is a destacking and dispensing device for books and book blocks, in particular pre-glued book blocks. The solution is found useful in particular during bookbinding operations performed on an industrial scale.

### Prior Art

The roll technology of digital printing uses large, printed rolls or webs of paper, usually with a width of several pieces, meaning pages with margins, of the final product, for example a book. In order to begin bookbinding production of a book, one starts with the cutting and pre-gluing operation performed by a paper reel processing machine.

In one configuration of this process, the result is a pre-glued book block. During this process, a paper web is folded by book ploughs, depending on the number of pages across the width of the web, to create a folded strip of paper with a width of a single page of the book. Such a web is then cut transversely to the direction of the unwinding motion of the web into so-called signatures. While each signature is moving, a line of glue spots is sprayed onto it near the spine. Subsequently, the signatures are arranged on one another into stacks of pre-glued book blocks, for example by means of a star-wheel stacking module. No glue is applied onto the final signature in the pre-glued book block, in order to avoid gluing the block to be collected onto the next block in the stack. The machine releases stacks of signatures glued to each other, which together make up several pre-glued book blocks. The processing of a roll of paper in this configuration provides the possibility of automation, including automatic destacking of pre-glued book blocks, and it has a low risk of error while feeding pre-glued book blocks to a binder, which is the next step in the bookbinding process.

However, from the point of view of the production process, this method has a significant process flaw-the produced pre-glued book blocks are dispensed in stacks, and not as individual items-resulting in the necessity for separating them before feeding them to the binder. This is due to the fact that the processing of a roll of paper is fast. A web of paper is processed with speeds from approx. 100 m/min. to 300 m/min. During the process, the stacks of sheets forming the pre-glued book blocks are collected on the table of a collecting assembly. Once a complete book block has been collected, the collecting table must be emptied before placing thereon sheets which are to form another pre-glued book block. It takes time to move forward an already collected individual pre-glued book block. In order to solve this problem, two collecting stations are usually used. When one collecting station dispenses a completed pre-glued book block, the flow of signatures arriving from the paper roll processing machine is redirected so that the second collecting station takes over the completion of the next pre-glued book block. However, with blocks of small volume, the method described above is insufficient, and there is not enough time to empty the collecting table. Therefore, a commonly used solution is to collect high stacks consisting of a plurality of pre-glued book blocks lying on one another. In such configuration, the pre-glued book blocks are not glued to each other. Hence there is a need to collect stacks of pre-glued book blocks, and subsequently to destack pre-glued book blocks before using them in subsequent bookbinding processes.

Solutions for separating stacks of paper, pre-glued book blocks and books themselves are known from prior art. For example, document US8690151B2 discloses an apparatus for separating out printed products from a stack. The apparatus for separating out products from a stack comprises a pushing device including a table, a pusher placed thereon, a support bar for the stack and retaining element mounted above the table with the pusher, as well as two removal rollers, an upper and a lower one, at the end of the table. The support bar and the retaining element are mounted above the table at such a distance therefrom which enables free pushing of a single product along with the pusher below them. The retaining element is placed at such a distance from the end of the table which allows the pressure rollers placed behind it to easily catch the product which is being pushed out. The device is intended to separate out individual products placed between the support bar and the retaining element.

Document US20130292895A1 discloses a cut-sheet feeder which sequentially draws and feeds individual cut sheets from a stack of cut sheets placed on one another. The feeder comprises a container with a stack of paper sheets placed therein. The front of the container comprises a retaining element which stops the dispensing of an excess number of sheets. Below the container there is a destacking assembly transporter, adjusted to come into contact with pushers and/or a slide ramp located in front of a multi-row narrow belt transporter. The feeder is also provided with several transporters receiving the destacked paper sheets, placed behind the destacking assembly transporter. Behind the container, above the multi-row narrow belt transporters there is an additional pressure roller which facilitates the catching of the destacked paper sheets. Separation takes place by sequential tilting of the destacking ramp and/or advancing the pusher so that the individual sheets are caught by a separating multi-row narrow belt transporter, and subsequently transferred under the retaining element and caught by the receiving transporter and pressure rollers which facilitate the catching of the destacked sheets. The feeder is adjusted to destack the sheets from a stack of sheets arranged on one another, placed in the feeder.

There are also known solutions for separating stacks of books, delivered to a device by transporters, as disclosed for example in US20070147980A1. The document discloses a device for destacking books, brochures, book blocks or similar cubic products delivered to the device in the form of a stack of products. The device comprises the following belts placed sequentially one after the other: of an accumulating roller conveyor, a belt conveyor delivering stacks for separation, a separating belt conveyor, and a fast belt conveyor receiving the destacked products. The sides of the separating belt conveyor and the belt delivering the stacks for separation are protected by the lateral boundaries of a casing. Inside the lateral boundaries of the casing, between the belt delivering the stacks for separation and the separating belt conveyor, a mechanism is used for blocking the delivery of the next stack of books after loading a single stack of products onto the separating belt conveyor. This mechanism also constitutes support for the back edge of the stack to be separated, providing stability of the arrangement of products in the stack during the process of destacking further products. An adjustable retaining element comprising vertical bars, whose ends are placed away from the upper edge of the book being separated, is positioned above the separating belt conveyor. The front edge of the stack of products to be separated during the destacking process rests against this retaining element, with the back one against the mechanism blocking the delivery of the next stack. Through the space created by the adjustable retaining element, the separating belt conveyor separates individual products from the stack by drawing them out of the bottom of the stack to be separated. The destacked individual products pass onto the fast belt conveyor, which is delivering the destacked products for further processing. While the bottom product to be separated is being pushed out of the stack, the products lying thereon fall to the back, so that they rest against the mechanism blocking the delivery of the next stack, and slide down onto the separating belt conveyor. The solution is provided with sensors and/or light barriers enabling control over the belts, the feeders and the mechanism blocking the delivery of a stack.

Known solutions are adjusted to separate stacks of books with covers, whereas pre-glued book blocks are characterised by much smaller integrity compared to books with covers, which causes the destacking of pre-glued book blocks in current devices to entail the risk of their damage, and in particular their rupture. The small integrity of pre-glued book blocks is mainly caused by the fact that the pre-glued book blocks do not have covers or stably glued spines, so the spine of such a pre-glued book block is much more prone to deformations and rupture-in particular when the block is characterised by great volume or weight. Moreover, a pre-glued book block consisting of thin signatures or individual sheets joined with each other by small spots of dispersion glue may come apart. The risk of damaging pre-glued book blocks grows in particular in industrial production, in which it is required for the consecutive operations during the printing and bookbinding process to be sufficiently efficient.

Therefore, the object of the invention is to solve the technical problem involving the considerable risk of damaging pre-glued book blocks during the process of destacking and separating them from the stack.

### The Essence of the Invention

The first invention relates to a destacking and dispensing device for stacks of books and pre-glued book blocks, comprising in the following sequence: a feeder, a destacking assembly, and a receiving mechanism. The destacking assembly comprises a destacking assembly transporter and a retaining element placed above the destacking assembly transporter and slidably fixed in a plane perpendicular to the plane of the destacking assembly transporter. The essence of the invention is in that the destacking assembly transporter has the form of a multi-row narrow belt conveyor, and the destacking assembly comprises a driven ejector fixed between the narrow belts of the multi-row narrow belt conveyor, the ejector is configured to reciprocating motion along the narrow belts of the multi-row narrow belt conveyor, and to reciprocating motion in a plane perpendicular to the plane of the narrow belts of the multi-row narrow belt conveyor. Moreover, the device is configured such that the multi-row narrow belt conveyor along with the ejector pushes at least one book or pre-glued book block out of the bottom of a stack resting against the retaining element, until at least a part of the book or pre-glued book block to be separated passes into the receiving mechanism, and after the ejector moves in a direction perpendicular to the plane of the narrow belts of the multi-row narrow belt conveyor to a position below this plane, and goes to a position for pushing another book or pre-glued book block.

It is justified when the motion of the ejector pushing at least one book or pre-glued book block out of the bottom of the stack resting against the retaining element along the narrow belts of the multi-row narrow belt conveyor in a direction towards the receiving mechanism ends once at least a part of the book or pre-glued book block to be separated has passes into the receiving mechanism.

It is preferable when the ejector is coupled with a first drive implementing reciprocating motion of the ejector along the narrow belts of the multi-row narrow belt conveyor, and with a second drive implementing the motion of the ejector in a plane perpendicular to the plane of the narrow belts of the multi-row narrow belt conveyor.

It is good when the receiving mechanism comprises a belt conveyor and a pressure roller placed above the belt conveyor next to the multi-row narrow belt conveyor.

It is appropriate when the destacking and dispensing device for stacks of books and pre-glued book blocks comprises a controller and a first code reader for reading codes applied onto books or pre-glued book blocks placed above the feeder, or/and it comprises a second code reader for reading codes applied onto books or pre-glued book blocks, placed below the multi-row narrow belt conveyor and in the space between the narrow belts of the multi-row narrow belt conveyor, and the controller is configured to control the destacking and dispensing device on the basis of data read from the first code reader and activate a serial mode, or to control the destacking and dispensing device on the basis of data read from the second code reader and activate an on-demand production mode.

It is desirable when the destacking and dispensing device for stacks of books and pre-glued book blocks comprises:
- a readiness sensor for loading the stack of books or pre-glued book blocks, placed above the feeder,
- a presence sensor for the stack of books or pre-glued book blocks in the area of the destacking assembly, placed in front of the retaining element and above the multi-row narrow belt conveyor,
- a dispensing completion sensor for a product leaving the stack of books or pre-glued book blocks, placed behind the retaining element, and in front of the belt conveyor,
and the device is further configured to combine the belt conveyor with a further discharging transporter for the books or pre-glued book blocks to be separated, above which a presence sensor for the separated books or pre-glued book blocks is placed, each of said sensors being adjusted to transmit data to the controller.

It is also preferable when the destacking and dispensing device for stacks of books and pre-glued book blocks comprises a frame connected to the frame drive and slidably fixed in a plane perpendicular to the plane of the multi-row narrow belt conveyor, wherein the retaining element, the pressure roller and the ejector are fixed on the frame.

It is also good when the destacking and dispensing device for stacks of books and pre-glued book blocks comprises a pressure beam placed above the multi-row narrow belt conveyor and configured to freely fall onto the stack of books or pre-glued book blocks to be separated.

It is also appropriate when the destacking and dispensing device for stacks of books and pre-glued book blocks comprises a stack support beam fixed above the multi-row narrow belt conveyor and slidably fixed in a plane perpendicular to the plane of the narrow belts of the multi-row narrow belt conveyor, and slidably along the narrow belts of the multi-row narrow belt conveyor, and adjusted to support back of the stack of books or pre-glued book blocks to be separated resting against the retaining element on the multi-row narrow belt conveyor.

It is also desirable when the receiving mechanism comprises a receiving roller and a pressure roller placed above the receiving roller, the receiving roller and the pressure roller being placed next to the multi-row narrow belt conveyor. Alternatively, it is good when the receiving mechanism comprises a robotised arm provided with a gripper adjusted to receive books or pre-glued book blocks from the multi-row narrow belt conveyor.

The second invention relates to a method for separating stacks of books and pre-glued book blocks, in which in a destacking assembly comprising a movable retaining element and a destacking assembly transporter, the position of the retaining element is set above the destacking assembly transporter, and a destacking window is created, and subsequently the destacking assembly is fed with stacks of books or pre-glued book blocks, which are transported by the destacking assembly transporter until the stack stops on the retaining element, and subsequently the books or pre-glued book blocks forming the stack are separated by pushing out the books or pre-glued book blocks lying at the bottom of the stack through the destacking window, and the books or pre-glued book blocks to be separated are introduced into a receiving mechanism. The essence of the method is in that the stacks of books or pre-glued book blocks in the destacking assembly are transported by the multi-row narrow belt conveyor, and once the stack stops on the retaining element, the multi-row narrow belt conveyor is stopped, the ejector being calibrated by moving it below the plane of the narrow belts of the multi-row narrow belt conveyor to a position in which, once the stack of books or pre-glued book blocks is stopped on the retaining element, the ejector is placed behind this stack, whereas once the stack of books or pre-glued book blocks is stopped on the retaining element, the ejector is raised to a destacking height resulting from the height of at least one product to be separated. Afterwards, the ejector, the multi-row narrow belt transporter and the receiving mechanism are activated at the same time in the same processing direction, and the books or pre-glued book blocks forming the stack are separated by pushing out the books or pre-glued book blocks lying at the bottom of the stack through the destacking window, wherein once at least a part of the book or pre-glued book block to be separated passes into the receiving mechanism, the multi-row narrow belt conveyor and the receiving mechanism continue the destacking, and the ejector is lowered below the plane of the narrow belts of the multi-row narrow belt conveyor and moves back in a direction away from the receiving mechanism in order to destack another book or pre-glued book block from the stack to be separated, or to finish the process.

It is preferable when the receiving mechanism continues the destacking of the part of the book to be separated when passing through the destacking window by pressing the book or pre-glued book block to be separated with the pressure roller against the belt of the belt conveyor and separating said book to be separated by the motion of the belt conveyor, wherein preferably the motion of the ejector along the narrow belts of the multi-row narrow belt conveyor in a direction towards the receiving mechanism preferably ends once the part of the book or pre-glued book block to be separated passes into the receiving mechanism.

It is good when the stack of books or pre-glued book blocks to be separated resting against the retaining element is pressed from the top and/or supported from the back.

It is justified when, once a book or pre-glued book block has been destacked, the multi-row narrow belt conveyor is stopped, following which the stack of books or pre-glued book blocks to be separated is moved in a direction away from the receiving mechanism, and it is moved away by 5-20 mm from the retaining element, following which the stack of books or pre-glued book blocks is transported again until the stack stops on the retaining element, and the destacking is performed again.

### Advantages of the Solution

The primary advantage of the invention is the ability to destack and dispense not only books, but also pre-glued book blocks without causing their damage, and while maintaining high speed and efficiency of the destacking process, corresponding to the speed of other industrial bookbinding processes. This feature has been achieved due to the use of a multi-row narrow belt conveyor with an ejector fixed between its narrow belts. As a result, the impact of the frictional force exerted on the products to be separated has been limited considerably. As a consequence, there is no risk of soiling, scratching or separating the signatures or sheets forming a pre-glued book block due to friction of the pre-glued book block against the bottom; in particular, friction of the stack of products against the belt conveyor has been eliminated. The risk of damage is also considerably limited with pre-glued book blocks of considerable volume. In such products, friction, and therefore the retardation of upper signatures in a pre-glued book block to be separated due to contact with the remaining products lying thereon, is so high that they are often separated from the pre-glued book block itself.

The risk of damaging books or pre-glued book blocks to be separated may be even more reduced by setting the same moving speed of the multi-row narrow belt conveyor, the ejector, and the receiving mechanism. Such a solution, where the speed of the consecutive conveyors is the same, allows to eliminate the friction of the product placed the lowest in the stack against the surface of further conveyors almost to zero, guaranteeing safe and uninterrupted movement of the products.

An increase in the efficiency of destacking books and pre-glued book blocks results from minimising the path of the ejector so that the ejector performs the shortest possible motion but allowing the receiving mechanism to take over the function of moving the book or pre-glued book block to be separated. This allows to increase the frequency of further cycles of the ejector, improving the efficiency of the machine. This allows to avoid long operating time of the ejector executing long motion necessary to push the entire product out of the bottom of the stack, and the subsequent equally long return motion. On the other hand, due to the ability of the ejector to move in a plane perpendicular to the plane of the narrow belts of the multi-row narrow belt conveyor, it is possible to adjust the operating height of the ejector to the thickness of the products to be separated, including, in combination with a proper position of the retaining element, adjustment of the ejector to simultaneous pushing out of several books or pre-glued book blocks. Due to this, the device is also characterised by universality, being able to optimally feed low stacks of products to other machines, such as bookbinding three-knife trimmer machines, which may handle several products simultaneously in one cycle.

It should be pointed out that both the device and the method implement the destacking and dispensing of books or pre-glued book blocks in accordance with the FIFO methodology (First In First Out), so the oldest product created in the previous process present at the bottom of the stack to be separated is the first product destacked and dispensed from the device. This is of critical importance for the production of books on demand.

The destacking and dispensing device for stacks of books and pre-glued book blocks is configured to separate stacks of books or pre-glued book blocks in the serial production mode, as well as in the mode of on-demand production of books, in which each consecutive product in the stack may be of different thickness. To this end, the device uses a first reader for reading codes applied onto books or pre-glued book blocks, placed above the feeder, and the use of a multi-row narrow belt conveyor has also allowed to use a second reader for reading codes applied onto books or pre-glued book blocks, placed below the destacking assembly transporter and in the space between the narrow belts of the multi-row narrow belt conveyor. Based on said readers it is possible to control the destacking and dispensing device for stacks of books and pre-glued book blocks, since in the serial production mode the top product from the stack of pre-glued book blocks has usually placed thereon a code comprising at least information about the thickness and length in the direction of the processing motion of pre-glued blocks forming the stack to be separated. In the on-demand production mode, each book block must in turn have on its cover information at least about the thickness of the blocks and the length of the blocks in the direction of the processing motion. Preferably, such a code is printed on the margin of the pre-glued book block intended for cutting, and therefore this operation does not result in leaving technical marks on the final product. The reading of codes both in serial production, and in particular in the on-demand book production mode, allows for fast and automatic calibration of the device, and for adjusting it to the geometrical parameters of individual blocks of pre-glued books, or to the parameters of the entire stacks. In the on-demand book production mode, codes present on the blocks of pre-glued books are read by the second reader directly after destacking a pre-glued book block lying at the bottom of the stack. It is only after reading and on the basis of the geometrical parameters of the next lowest located pre-glued book block that automatic calibration of the device occurs after each destacked pre-glued book block. Such a solution also allows to limit the workload during operation in an industrial bookbinding process, and it allows for fully automatic processing of stacks of blocks of various quantities, where each consecutive block may have different dimensions from others.

The sensors used in the device also improve automatic operation of the device. No further products detected by the readiness sensor for loading the stack of books or pre-glued book blocks placed above the feeder mean idleness of the previous process in the production line, and result in stopping the operation of the device. Due to the use of a discharging transporter with a presence sensor for the books or pre-glued book blocks to be separated placed above it, it is in turn possible to identify a situation in which no further destacked books or pre-glued book blocks are received by further devices forming the book production line. Due to the use of said sensor, the device records the fact that the next process does not receive any products and stops the operation. The presence sensor for a stack of books or pre-glued book blocks in the area of the destacking assembly placed in front of the retaining element and above the destacking assembly transporter, as well as the destacking completion sensor for the stack of books or pre-glued book blocks placed behind the retaining element and in front of the belt conveyor, allow in turn for further acceleration of the process by introducing another stack onto the multi-row narrow belt conveyor still before dispensing the final book/book block from the stack undergoing processing. After dispensing the final product to be separated and moving back the ejector, the next stack may be located in the destacking position-next to the retaining element, which ensures that the process is not slowed down by waiting for the loading of the next stack. However, this may require feeding the next stack already when the penultimate block is being dispensed from the stack. The controller must then know the number of blocks in the stack-it must be input into the device controller by the operator before the beginning of production or be included in a code to be read by the reader.

The destacking and dispensing device for stacks of books and pre-glued book blocks enables simple combination of the logic of dispensing books or pre-glued book blocks with the next machine, for example a book binder. To this end, it is possible to synchronise the destacking speed of the consecutive products, and therefore the speed of dispensing the consecutive products to further devices. The book dispensing speed in the destacking and dispensing device for stacks of books and pre-glued book blocks, meaning the speed of the multi-row narrow belt conveyor and the receiving mechanism, in particular in the form of a belt conveyor, may be equalised with the speed of the transporter of a further device. This can be achieved for example by using an encoder identifying the speed of the transporter of the further device and controlling the speed of the multi-row narrow belt conveyor and the receiving mechanism on the basis of its readings.

Due to the coupling of the ejector with separate drives, meaning the first drive implementing the reciprocating motion of the ejector along the narrow belts of the multi-row narrow belt conveyor, and the second drive implementing the motion of the ejector in a plane perpendicular to the plane of the narrow belts of the multi-row narrow belt conveyor, the ejector operates independently of other parts of the device, and it may first implement the pushing out the books or pre-glued book blocks, and subsequently return to position to push out another book or pre-glued book block with a speed which is sufficient and adjusted to the speed of the industrial bookbinding process.

The fixing of the retaining element, the ejector, the pressure roller of the receiving mechanism on a shared frame slidably fixed in a plane perpendicular to the plane of the narrow belts of the multi-row narrow belt conveyor allows for quick calibration of elements of the device, which must be adjusted to the books or pre-glued book blocks forming the stack to be separated. Such adjustment improves the efficiency and operating speed of the device, in particular in the on-demand book production mode, where the motion of a single element-the frame-allows for adjustment of other parts to each product to be separated. In addition, such design facilitates control over the device.

Yet another advantage is the ability to continuously perform the destacking of books or pre-glued book blocks with no need for production stoppages for releasing products jammed in the device. Like in other devices from prior art, after the bottom product to be separated has been pushed out of the stack, the remaining books or pre-glued book blocks fall onto the multi-row narrow belt conveyor-first the back edge thereof, and subsequently the front edge thereof. With products of considerable volume, while being transported in a direction towards the receiving mechanism, the upper edge of the falling book or book block to be separated would not fall, and it would hook on the retaining element, which would cause the product to become damaged, and the process to stop. This is particularly important for the final separation cycles of the stack, when the mass exerted onto the bottom book blocks is low. It is therefore preferable when the device uses a pressure beam, which prevents such kinds of jamming of products in the device. To the same end, it is also possible to use additional processing motion of the device, in which after the destacking of the book or pre-glued book block, the multi-row narrow belt conveyor moves the stack to be separated away from the retaining element, and afterwards transports the stack to be separated to the retaining element again. This results in moving the entire stack away from the retaining element and releasing a potentially jammed book or pre-glued book block. Also, when processing thick books or pre-glued book blocks, after pushing the bottom product out of the stack, the stack of books or pre-glued book blocks would tilt to the back so much that the top products would slide off it, causing the process to stop. In order to eliminate the risk of such sliding of the products, a support beam is used for the stack next to its back side located opposite the side resting against the retaining element. The stack of books or pre-glued book blocks is constantly supported, and even during the destacking of thick products, the products do not slide off the top of the stack.

### Description of the Drawings

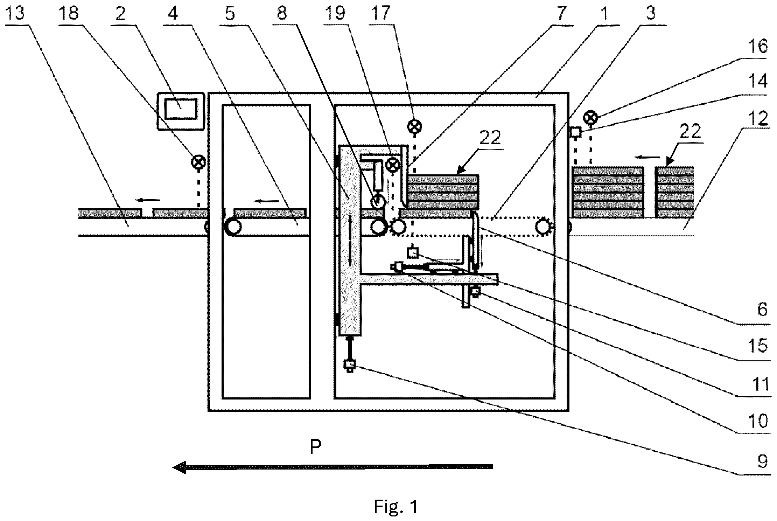

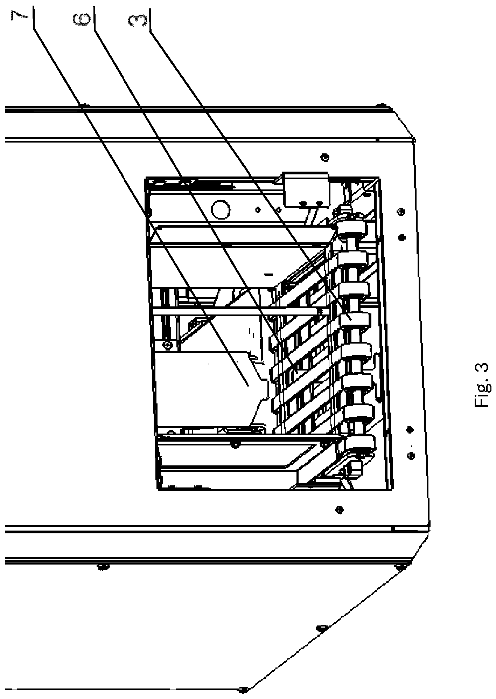

The invention is presented in embodiments and in the drawing, in which figs. 1-2 present a destacking and dispensing device for stacks of books and pre-glued book blocks in a schematic side view, and fig. 3 presents the destacking and dispensing device for stacks of books and pre-glued book blocks in a perspective view of the multi-row narrow belt conveyor from the side of the feeder.

### Detailed Description of the Invention

The destacking and dispensing device for stacks of books and pre-glued book blocks comprises a body 1 (fig. 1) on which a feeder 12, a destacking assembly, a receiving mechanism, and subsequently a further discharging transporter 13 for the destacked products, transporting them to the subsequent steps of the industrial bookbinding process, are arranged in this sequence one behind the other, fixed in the direction of the processing motion P. The purpose of using the device is to separate a stack 22 of products-books or pre-glued book blocks-into individual products which are processed in the subsequent steps of the process. The stacks 22 of books or pre-glued book blocks are delivered to the stack feeder 12 of the destacking and dispensing device, for example from earlier steps of the industrial bookbinding process, like cutting and pre-gluing performed on a cutting and gluing line, whose products are the pre-glued book blocks. The stacks 22 may be delivered to the feeder 12 by an operator.

Therefore, a belt conveyor 4 constituting a part of the device is combined with a discharging transporter 13, which may be used to deliver the destacked products to other devices.

The destacking assembly comprises a destacking assembly transporter in the form of multi-row narrow belt conveyor 3, which has a driven ejector 6 fixed between the narrow belts of the multi-row narrow belt conveyor 3, as well as a retaining element 7 placed above the multi-row narrow belt conveyor 3 and fixed slidably in a plane perpendicular to the plane of the narrow belts of the multi-row narrow belt conveyor 3. The ejector 6 is adjusted to reciprocating motion along the narrow belts of the multi-row narrow belt conveyor 3, and to reciprocating motion in a plane perpendicular to the plane of the narrow belts of the multi-row narrow belt conveyor 3.

The receiving mechanism comprises the belt conveyor 4 and a pressure roller 8 placed above the belt conveyor 4, directly next to the end of the multi-row narrow belt conveyor 3. The belt conveyor 4 uses commercially available rubber conveyor belts, which may be rubber conveyor belts of increased adhesion. The pressure roller 8 is connected to the body 1 of the device by means of a pneumatic cylinder, due to which the pressure roller 8 presses the product to be separated against the belt of the belt conveyor 4, continuing the destacking of individual products passing under the retaining element 7 during operation of the device.

Individual elements of the destacking and dispensing device for stacks of books and pre-glued book blocks are coupled with drives in the form of servomotors. The ejector 6 is coupled with a first drive 10 implementing reciprocating motion of the ejector 6 along the narrow belts of the multi-row narrow belt conveyor 3, and with a second drive 11 implementing the motion of the ejector 6 in a plane perpendicular to the plane of the narrow belts of the multi-row narrow belt conveyor 3. The first drive 10 and the second drive 11 implement the motion of the ejector 6 during operation of the device and separation of the stack 22 of books or pre-glued book blocks.

In addition, the destacking and dispensing device for stacks of books and pre-glued book blocks comprises a frame 5 fixed on the body 1. The retaining element 7, the pressure roller 8 and the ejector 6 are fixed on the frame 5. The frame 5 is slidably fixed in a plane perpendicular to the plane of the narrow belts of the multi-row narrow belt conveyor 3, due to which, by changing the position of the frame 5 in this plane, it is possible to control and adjust the position of the retaining element 7, the pressure roller and the ejector 6 to the height of the products forming the stack 22 of books or pre-glued book blocks. The use of the frame 5 facilitates controlling the destacking and dispensing device, since the position of all the elements connected to the frame 5 depends on the height of the products forming the stack 22. Due to the connection of the frame 5 to a frame drive 9, the position of the frame 5 may be adjusted automatically. The first drive 10 and the second drive 11 executing the motion of the ejector 11 are also fixed on the frame 5.

The retaining element 7 is additionally connected to the frame by means of a slide and a manually driven helical transmission, not shown in the drawing. This enables independent change of position and correction of the height of the retaining element with respect to the plane of the narrow belts of the multi-row narrow belt conveyor 3. This allows for quick manual adjustment of the operating mode of the machine to a product setting difficulties in the process, for example by a spine swell or a wavy book block, which hinders measuring the parameters of the products forming the stack 22.

In an embodiment, the retaining element 7 is slidably fixed in a plane perpendicular to the plane of the narrow belts of the multi-row narrow belt conveyor 3 in a vertical direction, moving towards or away from the plane of the narrow belts of the multi-row narrow belt conveyor 3. Due to this, it is possible to adjust the distance of the retaining element 7 from the belt conveyor, and thus the distance between the retaining element 7 and the multi-row narrow belt conveyor 3, corresponding to the thickness of the products to be separated, and defining a destacking window.

In other embodiments, the position of the retaining element 7 slidably fixed in a plane perpendicular to the plane of the narrow belts of the multi-row narrow belt conveyor 3 may also be adjusted in the horizontal direction, in particular in cases when the retaining element 7 has a width smaller than the width of the multi-row narrow belt conveyor 3.

The destacking and dispensing device for stacks of books and pre-glued book blocks is intended for separating a stack 22 of products formed by books or pre-glued book blocks in the direction of the processing motion P from the feeder 12, through the destacking assembly, and to the receiving mechanism. In an embodiment, the stack 22 is made of pre-glued book blocks. In operation, the destacking and dispensing device for stacks of books and pre-glued book blocks separates the stack 22 into individual products.

The destacking and dispensing device for stacks of books and pre-glued book blocks is configured such that the multi-row narrow belt conveyor 3 along with the ejector 6 pushes at least one pre-glued book block out of the bottom of the stack 22 resting against the retaining element 7. The motion of the ejector 6 along the narrow belts of the multi-row narrow belt conveyor 3 in the direction of the processing motion P, meaning in the direction of the belt conveyor 4, ends once a part of the pre-glued book block to be separated passes into the belt conveyor 4 and the pressure roller 8. Subsequently, the ejector 6 moves in a direction perpendicular to the plane of the narrow belts of the multi-row narrow belt conveyor 3 to a position below this plane, and by performing a return motion it switches to a position for pushing out another book or pre-glued book block, and further destacking of the pre-glued book block is took over by the cooperating belt conveyor 4 and pressure roller 8.

In order to implement such motion of the ejector 6 and efficient separation of consecutive stacks 22 into individual products, the body 1 of the destacking and dispensing device for stacks of books and pre-glued book blocks has connected thereto a controller 2 and a first code reader 14 for reading codes applied onto books or pre-glued book blocks, placed above the feeder 12, as well as a second code reader 15 for reading codes applied onto books or pre-glued book blocks. The second code reader 15 is placed below the destacking assembly transporter 3 and in the space between the narrow belts of the multi-row narrow belt conveyor.

The controller 2 is configured to control the destacking and dispensing device primarily on the basis of the data read from the first code reader 14, and activate the serial mode, or to control the destacking and dispensing device on the basis of the data read from the second code reader 15, and activate the on-demand production mode.

The codes read by the first code reader 14 or the second code reader 15 are preferably printed on the margin of pre-glued book blocks forming the stack which is to be cut off, due to which this operation does not result in leaving technical marks on the final product.

The first code reader 14 reads a code comprising at least information about the height of the pre-glued book blocks forming the stack, and about the length of these pre-glued book blocks in the direction of the processing motion P and transmits this information to the controller 2. In this setting, the device assumes that the stack 22 is formed by products of identical sizes. The destacking and dispensing device may execute the process of destacking products from the stack 22 so that when the next stack 22 is delivered to a ready for loading position by the feeder 12, the code applied onto the top pre-glued book block of the stack 22 is read by the first code reader 14. Automatic calibration of the settings of the machine and their adjustment to the products forming the stack 22 occur on the basis of this code. During the operation of the destacking and dispensing device, the entire stack 22 of products is split into individual products. Various stacks 22 consisting of different pre-glued book blocks may be fed as further stacks 22. The destacking and dispensing device automatically adjusts its parameters to the conditions of production, such as the range of motion of the ejector 6, or the height of the retaining element 7 above the plane of the narrow belts of the multi-row narrow belt conveyor. The destacking and dispensing device operates without stopping, and without the operator's interference.

When the first code reader 14 does not read any information or it is deactivated, the second code reader 15 is active, activating the on-demand production mode. Once the stack 22 of pre-glued book blocks has reached the destacking position, meaning a position in which the stack 22 rests against the retaining element 7, the second code reader 15 reads the code, meaning the data related to the geometrical parameters of the pre-glued book block located the lowest in the stack 22. Automatic calibration of the settings of the device and their adjustment to the product located the lowest in the stack 22 occur on the basis of this code. Once the lowermost pre-glued book block has been pushed out, the destacking and dispensing device stops, and the second code reader 15 reads the data related to the geometrical parameters of the next pre-glued book block placed the lowest in the stack 22, and the settings of the device are automatically recalibrated and adjusted to the product currently undergoing destacking.

In the manner described above, it is possible to fully automatically process stacks 22 of pre-glued book blocks of various quantities, where each following pre-glued book block may have different dimensions from the rest. In this manner, the destacking and dispensing of pre-glued book blocks is implemented using the FIFO method (First In First Out), which means that the oldest pre-glued book block formed in the preceding process, which is the pre-glued book block at the bottom of the stack 22, would be the first pre-glued book block dispensed from the destacking and dispensing device. This is of critical significance for handling on-demand production of books, because the sequence of pre-glued book blocks in the production flow of the pre-glued book blocks must be identical to the sequence of book covers in a separately prepared flow of covers. Disruptions in the sequence of semi-finished products in one of these flows prevent automatic on-demand production of books.

In order to further streamline the process and its automation, the destacking and dispensing device for stacks of books and pre-glued book blocks has the following connected to the body 1:
- a readiness sensor 16 for loading the stack 22 of books or pre-glued book blocks, placed above the feeder 12,
- a presence sensor 17 for the stack 22 of books or pre-glued book blocks in the area of the destacking assembly, placed in front of the retaining element 7 and above the multi-row narrow belt conveyor 3,
- a dispensing completion sensor 19 for a product leaving the stack 22 of books or pre-glued book blocks, placed behind the retaining element 7, and in front of the belt conveyor 4,
- a presence sensor 18 for the books or pre-glued book blocks to be separated, placed above the discharging transporter 13.

Each of said sensors is configured to transmit data to the controller 2, and the controller itself is configured to control the operation of the device not only on the basis of the data from the first code reader 14 or the second code reader 15, but also on the basis of the data from the readiness sensor 16, the presence sensor 17, the dispensing completion sensor 19, and the presence sensor 18.

By using the destacking and dispensing device for stacks of books and pre-glued book blocks with the described configuration, a method for separating stacks 22 of books and pre-glued book blocks has also been implemented, in which in the destacking assembly comprising the movable retaining element 7 and the destacking assembly transporter in the form of the multi-row narrow belt conveyor 3, the position of the retaining element 7 has been set above the multi-row narrow belt conveyor 3 so as to form a destacking window which corresponds to the distance between the retaining element 7 and the multi-row narrow belt conveyor 3. Subsequently, stacks 22 of books or pre-glued book blocks were fed to the destacking assembly by means of the feeder 12. Like before, the stack 22 was made of pre-glued book blocks. The stacks 22 were subsequently transported by the multi-row narrow belt conveyor 3 until the stack 22 stopped on the retaining element 7, and subsequently the pre-glued book blocks forming the stack 22 were destacked by pushing out the pre-glued book blocks lying at the bottom of the stack through the destacking window and introducing the pre-glued book blocks to be separated to the receiving mechanism in the form of the belt conveyor 4 and the pressure roller 8, which took over further drawing of individual pre-glued book blocks out of the bottom of the stack 22.

Once the stack 22 was stopped on the retaining element 7, the multi-row narrow belt conveyor 3 stopped and the ejector 6 was calibrated by moving it below the plane of the narrow belts of the multi-row narrow belt conveyor 3 in a direction opposite to the direction of the processing motion P, so in a direction away from the receiving mechanism, to a position in which the ejector 6 passes the stack 22 of pre-glued book blocks, positioning itself behind it. In the next step, the ejector 6 was raised to a destacking height resulting from the height of at least one product to be separated, in this embodiment from the height of the pre-glued book block lying at the bottom of the stack 22. Subsequently, the ejector 6, the multi-row narrow belt transporter 3 and the belt conveyor 4 were activated simultaneously in the same direction of the processing motion P, and the pre-glued book blocks forming the stack 22 were destacked by pushing out the pre-glued book blocks lying at the bottom of the stack 22 through the destacking window. The motion of the ejector 6 along the narrow belts of the multi-row narrow belt conveyor 3 in a direction towards the belt conveyor 4 was ended once a part of the pre-glued book block to be separated passed into the receiving mechanism-the belt conveyor 4 with the pressure roller 8, which took over the drawing of the product out of the bottom of the stack 22. Once a part of the pre-glued book block to be separated had passed into the receiving mechanism, the multi-row narrow belt conveyor 3 and the receiving mechanism continued destacking by pressing the pre-glued book block to be separated against the belt of the belt conveyor 4 with the pressure roller 8 and destacking it by the motion of the belt conveyor 4. During this time, the ejector 6 lowered itself due to the action of the first drive 10 and the second drive 11 below the plane of the narrow belts of the multi-row narrow belt conveyor 3, and executed a return motion in a direction opposite to the direction of the processing motion P, meaning away from the receiving mechanism, in order to position itself behind the stack 22 to be separated, and in order to destack another pre-glued book block from the stack 22 to be separated, or to finish the process when the entire stack 22 was split into individual products. When an individual pre-glued book block is pushed out of the bottom of the stack 22, the remaining pre-glued book blocks fall onto the multi-row narrow belt conveyor 3 - first the back edge thereof, and subsequently the front edge thereof.

By using the data originating from the abovementioned sensors, the following actions are performed in the destacking and dispensing device:
- the controller 2 activates the feeder 12 until a time when the first stack 22 reaches a loading position and the circuit of the readiness sensor 16 is closed, wherein the code is then also read by the first code reader 14, as described above,
- if the presence sensor 17 is open, which means that there are no products in front of the retaining element 7, the controller 2 activates the feeder 12 and the multi-row narrow belt conveyor 3 at the same time, and the feeder 12 operates until the circuit of the readiness sensor 16 is closed again and the next stack 22 reaches a loading position,
- the multi-row narrow belt conveyor 3 operates until the stack 22 reaches a destacking position, which would be identified by closing the circuit of the presence sensor 17, and which causes initiation of the process of destacking and dispensing individual products from the device - the pre-glued book blocks.

The next step involves the destacking and dispensing of an individual pre-glued book block from the stack 22. The operation involves simultaneous activation of the ejector 6, the multi-row narrow belt conveyor 3 and the belt conveyor 4 at the same moment and in the same direction. The ejector 6 operates until the front edge of the destacked pre-glued book block reaches the belt conveyor 4 and the pressure roller 8, following which the pressure roller is lowered due to the action of a pneumatic cylinder integrated therewith, and the pre-glued book block is pressed against the belt of the belt conveyor 4. The belt conveyor 4 and the pressure roller take over the drawing of the pre-glued book block out of the bottom of the stack 22. At this moment, the ejector 6 prepares to dispense another pre-glued book block. The multi-row narrow belt conveyor 3 stops after opening the circuit of the dispensing completion sensor 19. The belt conveyor 4 does not stop when destacking is in progress-it operates continuously. After this sequence, further stacks 22 are delivered to the device. The operation of destacking and dispensing pre-glued book blocks keeps going for the stacks 22 fed sequentially to the destacking and dispensing device this operation takes place continuously. It can only be interrupted by the following circumstances:
- the absence of another stack 22 delivered to a position for loading the feeder, due to which the circuit of the readiness sensor 16 does not become closed. Such a situation during the operation of the feeder 12 means idleness of the previous process in the production line, and it results in interrupting the operation of the device,
- the discharging transporter 13 does not receive destacked pre-glued book blocks, which causes the circuit of the presence sensor 18 to become closed, which means that the next process did not receive the separated products, which also results in interrupting the operation of the device.

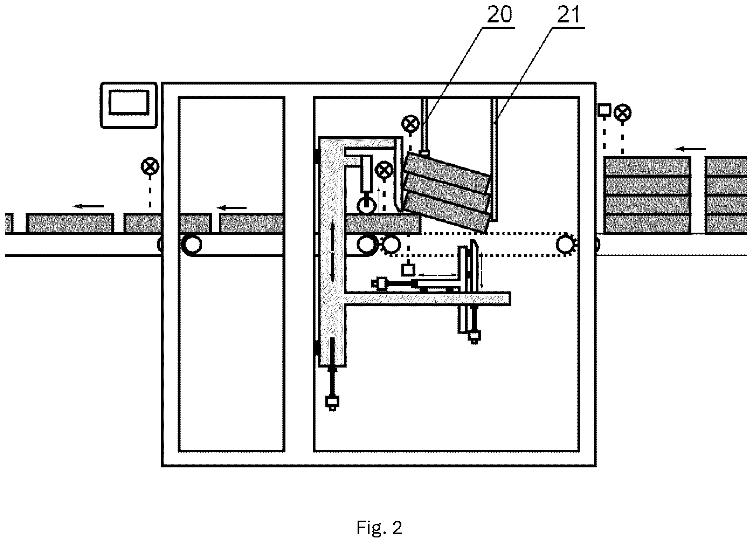

In the second embodiment, the destacking and dispensing device for stacks of books and pre-glued book blocks is designed like in the first embodiment, and it is further provided with a pressure beam 20 (fig. 2) and a stack support beam 21 for the stack 22 of books or pre-glued book blocks to be separated. The pressure beam 20 is connected to the body 1 above the multi-row narrow belt conveyor 3, and it is adjusted to freely fall onto the stack 22, pressing it during the destacking process against the multi-row narrow belt conveyor 3. To this end, the pressure beam 20 has two clamps cooperating with guideways fixed on the body. In such design, the pressure beam 20 falls onto the stack 22 by gravity and freely lies on the stack 22. In addition, the pressure beam 20 is connected to a drive raising the beam to an upper position once separation of the stack 22 has been completed. The stack support beam 21 is in turn also connected to the body 1 above the multi-row narrow belt conveyor 3. The stack support beam 21 is slidably fixed in a plane perpendicular to the plane of the narrow belts of the multi-row narrow belt conveyor 3, so that when the stack 22 of books or pre-glued book blocks is transported, in order for it to stop on the retaining element 7, the beam is raised, and once the stack 22 has reached the retaining element 7, the beam is lowered and it is placed directly behind the stack 22, supporting the stack 22 during destacking. Therefore, the support beam 21 is adjusted to support the stack of books or pre-glued book blocks to be separated resting against the retaining element 7 on the multi-row narrow belt conveyor 3. This avoids problems related to the products sliding down from the top of the stack 22 during the tilting of the stack 22 occurring while pushing an individual product out of the bottom of the stack 22. This also prevents the jamming of the stack 22 in the device during the final separation cycles of the stack 22, when the mass of the stack 22, meaning the mass exerted onto the bottom pre-glued book blocks, is low.

The method for separating stacks 22 of books and pre-glued book blocks was also implemented analogically and using pressing the stack 22 from the top by means of the pressure beam 20 and holding the stack 22 from the back by means of the support beam 21.

In the third embodiment, the stack 22 of books was separated with the use of the device with the design presented in the first embodiment. In order to eliminate jamming of the stack 22 in the device, additional motion of the device was implemented during the final separation cycles of the stack 22. Once the book was separated from the stack 22 like described earlier, the multi-row narrow belt conveyor 3 moved the stack 22 to be separated away from the retaining element 7, following which the stack 22 to be separated was again transported to the retaining element 7. Moving the stack 22 to be separated away from the retaining element 7 involved activation of the multi-row narrow belt conveyor 3 in a direction opposite to the direction of the processing motion P and moving the stack to be separated by a distance of 5-20 mm from the retaining element 7. In this embodiment, the stack 22 was moved away from the retaining element 7 by 10 mm. This was achieved by moving the entire stack 22 away from the retaining element 7 and releasing a potentially jammed book. Once the stack 22 was transported again by the multi-row narrow belt conveyor 3, the multi-row narrow belt conveyor 3, the ejector 6 and the belt conveyor 4 were activated, and the destacking of products from the stack 22 was implemented as described in the first embodiment.

In other embodiments, functionality of the receiving mechanism may be implemented by devices used for transporting products in prior art. In particular, the receiving mechanism may be formed by a pair of rollers: a receiving roller and a pressure roller. While passing through the destacking window, the product to be separated, a book or a pre-glued book block, would be caught by the receiving roller and the pressure roller, which would continue the destacking process. Alternatively, the receiving mechanism may also have the form of a robotised arm provided with a gripper adjusted to receive the books or pre-glued book blocks from the multi-row narrow belt conveyor once they have passed through the destacking window.

Regardless of the embodiment, it is preferable when the moving speed of the ejector 6, the belt transporter 4 and the multi-row narrow belt conveyor 3 is equal. Such a solution allows for eliminating friction against the surface under the stack, guaranteeing safe and free movement of the material.

The destacking and dispensing device may be connected logically to a further device in the industrial bookbinding process in a simple manner, by synchronising the dispensing speed of the books or the pre-glued book blocks, meaning the speed of operation of the receiving mechanism, in particular in the form of a belt conveyor 4, and the speed of the multi-row narrow belt conveyor 3, with the speed of the transporter of the further device. This may be achieved for example by using an encoder identifying the speed of the transporter of the further device.

Due to the adjustable height of the ejector 6, also independently of the realized embodiment, with proper parameters input manually or automatically into the controller 2, it is possible to separate and push out lower stacks having several products. Due to this, the destacking and dispensing device becomes universal, being able to optimally feed low stacks of products also to other machines, such as bookbinding three-knife trimmer machines, which may handle several products simultaneously.

## Claims

1. A destacking and dispensing device for stacks of books and pre-glued book blocks, comprising in the following sequence: a feeder (12), a destacking assembly and a receiving mechanism, the destacking assembly comprising a destacking assembly transporter and a retaining element (7) placed above the destacking assembly transporter and slidably fixed in a plane perpendicular to the plane of the destacking assembly transporter, **characterised in that** the destacking assembly transporter has the form of a multi-row narrow belt conveyor (3), and the destacking assembly comprises a driven ejector (6) fixed between the narrow belts of the multi-row narrow belt conveyor (3), wherein the ejector (6) is configured to reciprocating motion along the narrow belts of the multi-row narrow belt conveyor (3), and to reciprocating motion in a plane perpendicular to the plane of the narrow belts of the multi-row narrow belt conveyor (3), and the device is further configured such that the multi-row narrow belt conveyor (3) together with the ejector (6) pushes at least one book or pre-glued book block out of the bottom of a stack resting against the retaining element (7), until at least a part of the book or pre-glued book block to be separated passes into the receiving mechanism, and after the ejector (6) moves in a direction perpendicular to the plane of the narrow belts of the multi-row narrow belt conveyor (3) to a position below this plane, and goes to a position for pushing out another book or pre-glued book block.

2. The destacking and dispensing device for stacks of books and pre-glued book blocks according to claim 1, **characterised in that** the motion of the ejector (6) pushing at least one book or pre-glued book block out of the bottom of the stack resting against the retaining element (7) along the narrow belts of the multi-row narrow belt conveyor (3) in a direction towards the receiving mechanism ends once at least a part of the book or pre-glued book block to be separated passes into the receiving mechanism.

3. The destacking and dispensing device for stacks of books and pre-glued book blocks according to claim 1 or 2, **characterised in that** the ejector (6) is coupled with a first drive (10) implementing reciprocating motion of the ejector (6) along the narrow belts of the multi-row narrow belt conveyor (3), and with a second drive (11) implementing the motion of the ejector (6) in a plane perpendicular to the plane of the narrow belts of the multi-row narrow belt conveyor (3).

4. The destacking and dispensing device for stacks of books and pre-glued book blocks according to any of the preceding claims, **characterised in that** the receiving mechanism comprises a belt conveyor (4) and a pressure roller (8) placed above the belt conveyor (4) next to the multi-row narrow belt conveyor (3).

5. The destacking and dispensing device for stacks of books and pre-glued book blocks according to any of the preceding claims, **characterised in that** it comprises a controller (2) and a first code reader (14) for reading codes applied onto the books or pre-glued book blocks, placed above the feeder (12), or/and a second code reader (15) for reading codes applied onto the books or pre-glued book blocks, placed below the multi-row narrow belt conveyor (3) and in the space between the narrow belts of the multi-row narrow belt conveyor, and the controller (2) is configured to control the destacking and dispensing device on the basis of data read from the first code reader (14), and to activate a serial mode, or to control the destacking and dispensing device on the basis of data read from the second code reader (15), and to activate an on-demand production mode.

6. The destacking and dispensing device for stacks of books and pre-glued book blocks according to any of the preceding claims, **characterised in that** it comprises
- a readiness sensor (16) for loading the stack of books or pre-glued book blocks, placed above the feeder (12),
- a presence sensor (17) for the stack of books or pre-glued book blocks in the area of the destacking assembly, placed in front of the retaining element (7) and above the multi-row narrow belt conveyor (3),
- a dispensing completion sensor (19) for a product leaving the stack of books or pre-glued book blocks, placed behind the retaining element (7), and in front of the belt conveyor (4),
and the device is further configured to combine the belt conveyor (4) with a further discharging transporter (13) for the books or pre-glued book blocks to be separated, above which a presence sensor (18) for the separated books or pre-glued book blocks is placed, each of said sensors being adjusted to transmit data to the controller (2).

7. The destacking and dispensing device for stacks of books and pre-glued book blocks according to any of the preceding claims, **characterised in that** it comprises a frame (5) connected to the frame drive (9) and slidably fixed in a plane perpendicular to the plane of the narrow belts of the multi-row narrow belt conveyor (3), wherein the retaining element (7), the pressure roller (8) and the ejector (6) are fixed on the frame (5).

8. The destacking and dispensing device for stacks of books and pre-glued book blocks according to any of the preceding claims, **characterised in that** it comprises a pressure beam (20) placed above the multi-row narrow belt conveyor (3) and configured to freely fall onto the stack of books or pre-glued book blocks to be separated.

9. The destacking and dispensing device for stacks of books and pre-glued book blocks according to any of the preceding claims, **characterised in that** it comprises a stack support beam (21) fixed above the multi-row narrow belt conveyor (3) and slidably fixed in a plane perpendicular to the plane of the narrow belts of the multi-row narrow belt conveyor (3), and slidably along the narrow belts of the multi-row narrow belt conveyor (3), and configured to support back of the stack of books or pre-glued book blocks to be separated resting against the retaining element (7) on the multi-row narrow belt conveyor (3).

10. The destacking and dispensing device for stacks of books and pre-glued book blocks according to any of the claims from 1 to 3 or from 5 to 9, **characterised in that** the receiving mechanism comprises a receiving roller and a pressure roller placed above the receiving roller, the receiving roller and the pressure roller being placed next to the multi-row narrow belt conveyor (3).

11. The destacking and dispensing device for stacks of books and pre-glued book blocks according to any of the claims from 1 to 3 or from 5 to 9, **characterised in that** the receiving mechanism comprises a robotised arm provided with a gripper configured to collect the books or pre-glued book blocks from the multi-row narrow belt conveyor (3).

12. A method for separating stacks of books and pre-glued book blocks, in which in a destacking assembly comprising a movable retaining element (7) and a destacking assembly transporter, the position of the retaining element (7) is set above the destacking assembly transporter, and a destacking window is created, and subsequently the destacking assembly is fed with stacks of books or pre-glued book blocks, which are transported by the destacking assembly transporter until the stack stops on the retaining element (7), and subsequently the books or pre-glued book blocks forming the stack are separated by pushing out the books or pre-glued book blocks lying at the bottom of the stack through the destacking window, and the books or pre-glued book blocks to be separated are introduced into a receiving mechanism, **characterised in that** the stacks of books or pre-glued book blocks in the destacking assembly are transported by a multi-row narrow belt conveyor (3), and once the stack stops on the retaining element (7), the multi-row narrow belt conveyor (3) is stopped, an ejector (6) being calibrated by moving it below the plane of the narrow belts of the multi-row narrow belt conveyor (3) to a position in which, once the stack of books or pre-glued book blocks is stopped on the retaining element (7), the ejector (6) is placed behind this stack, whereas once the stack of books or pre-glued book blocks is stopped on the retaining element (7), the ejector (6) is raised to a destacking height resulting from the height of at least one product to be separated, and afterwards, the ejector (6), the multi-row narrow belt transporter (3) and the receiving mechanism are activated at the same time in the same processing direction, and the books or pre-glued book blocks forming the stack are separated by pushing out the books or pre-glued book blocks lying at the bottom of the stack through the destacking window, wherein once at least a part of the book or pre-glued book block to be separated has passes into the receiving mechanism, the multi-row narrow belt conveyor and the receiving mechanism continue the destacking, and the ejector is lowered below the plane of the narrow belts of the multi-row narrow belt conveyor and moves back in a direction away from the receiving mechanism in order to destack another book or pre-glued book block from the stack to be separated, or to finish the process.

13. The method according to claim 12, **characterised in that** the receiving mechanism continues the destacking of the part of the book to be separated when passing through the destacking window by pressing the book or pre-glued book block to be separated with the pressure roller (8) against the belt of a belt conveyor (4) and separating said book to be separated by the motion of the belt conveyor (4), wherein preferably the motion of the ejector (6) along the narrow belts of the multi-row narrow belt conveyor (3) in a direction towards the receiving mechanism ends once the part of the book or pre-glued book block to be separated passes into the receiving mechanism.

14. The method according to claim 12 or 13, **characterised in that** the stack of books or pre-glued book blocks to be separated resting against the retaining element is pressed from the top and/or supported from the back.

15. The method according to any of the claims from 12 to 13, **characterised in that** once a book or pre-glued book block has been destacked, the multi-row narrow belt conveyor (3) is stopped, following which the stack of books or pre-glued book blocks to be separated is moved in a direction away from the receiving mechanism, and it is moved away by 5-20 mm from the retaining element (7), following which the stack of books or pre-glued book blocks is transported again until the stack stops on the retaining element (7), and the destacking is performed again.
